(19) **Europäisches Patentamt European Patent Office Office européen des brevets**

(11) **EP 4 647 465 A1**

(12) **EUROPEAN PATENT APPLICATION**
published in accordance with Art. 153(4) EPC

(43) Date of publication:
**12.11.2025 Bulletin 2025/46**

(21) Application number: **24738754.1**

(22) Date of filing: **05.01.2024**

(51) International Patent Classification (IPC):
**C08L 25/12** (2006.01)     **C08L 55/02** (2006.01)
**C08L 91/06** (2006.01)     **C08L 83/04** (2006.01)

(52) Cooperative Patent Classification (CPC):
**C08L 25/12; C08L 55/02; C08L 83/04; C08L 91/06**

(86) International application number:
**PCT/KR2024/000257**

(87) International publication number:
**WO 2024/147686 (11.07.2024 Gazette 2024/28)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.01.2023 KR 20230001864**

(71) Applicant: **LG CHEM, LTD.**
**Seoul 07336 (KR)**

(72) Inventors:
• **BAE, Jae Yeon**
**Daejeon 34122 (KR)**
• **YOO, Je Sun**
**Daejeon 34122 (KR)**
• **NAM, Ki Young**
**Daejeon 34122 (KR)**
• **BAE, Seon Hyeong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **THERMOPLASTIC RESIN COMPOSITION**

(57)     The present invention relates to a thermoplastic resin composition which includes a base resin and an additive, wherein the base resin includes a first diene-based graft polymer, a second diene-based graft polymer and a vinyl-based non-grafted polymer, an average particle diameter of a diene-based rubber polymer of the first diene-based graft polymer is larger than an average particle diameter of a diene-based rubber polymer of the second diene-based graft polymer, the additive includes an olefin-based non-grafted polymer and a siloxane-based mixture in a weight ratio of 1:0.85 to 5.05, and the siloxane-based mixture includes a siloxane-based polymer and a thermoplastic polymer.

## EP 4 647 465 A1

**Description**

[Technical Field]

Cross-Reference to Related Application

This application claims priority to and the benefit of Korean Patent Application No. 10-2023-0001864, filed on January 5, 2023, the disclosure of which is incorporated herein by reference in their entireties.

Technical Field

The present invention relates to a thermoplastic resin composition.

[Background Art]

Diene-based graft polymers include a diene-based rubber polymer; and a shell including an aromatic vinyl-based monomer unit and a vinyl cyanide-based monomer unit, which are grafted to the diene-based rubber polymer. The diene-based graft polymer exhibits high impact resistance, chemical resistance, thermal stability, colorability, fatigue resistance, stiffness and processability as compared to conventional high impact polystyrene (HIPS). Due to these properties, molded articles manufactured from a thermoplastic resin composition including the diene-based graft polymer are used as automotive interior and exterior materials, office equipment, parts for various electrical and electronic products, food containers, cosmetic containers or pharmaceutical containers.

For mass production of molded articles using such a thermoplastic resin composition, injection releasability and injection moldability need to be improved. However, when the composition of the thermoplastic resin composition is changed to improve the injection releasability and injection moldability of the thermoplastic resin composition, impact resistance and colorability are degraded.

Accordingly, research is being conducted on a method of improving the injection releasability and injection moldability of a thermoplastic resin composition while maintaining impact resistance and colorability at excellent levels.

[Related Art Documents]

[Patent Documents]

(Patent Document 1) KR2001-0062861A

[Disclosure]

[Technical Problem]

The present invention is directed to providing a thermoplastic resin composition which has excellent impact resistance, injection releasability, injection moldability and colorability and is capable of mass-producing molded articles.

[Technical Solution]

1) One aspect of the present invention provides a thermoplastic resin composition which includes a base resin and an additive, wherein the base resin includes a first diene-based graft polymer, a second diene-based graft polymer and a vinyl-based non-grafted polymer, an average particle diameter of a diene-based rubber polymer of the first diene-based graft polymer is larger than an average particle diameter of a diene-based rubber polymer of the second diene-based graft polymer, the additive includes an olefin-based non-grafted polymer and a siloxane-based mixture in a weight ratio of 1:0.85 to 5.05, and the siloxane-based mixture includes a siloxane-based polymer and a thermoplastic polymer.

2) According to 1), the present invention provides a thermoplastic resin composition in which the additive includes the olefin-based non-grafted polymer and the siloxane-based mixture in a weight ratio of 1:1.00 to 4.50.

3) According to 1) or 2), the present invention provides a thermoplastic resin composition in which the first diene-based graft polymer includes: a diene-based rubber polymer having an average particle diameter of 200 to 550 nm; and a shell including aromatic vinyl-based monomer and vinyl cyanide-based monomer units grafted to the diene-based rubber polymer.

4) According to any one of 1) to 3), the present invention provides a thermoplastic resin composition in which the second diene-based graft polymer includes: a diene-based rubber polymer having an average particle diameter of 30 to 200 nm; and a shell including aromatic vinyl-based monomer and vinyl cyanide-based monomer units grafted to the diene-based rubber polymer.

5) According to any one of 1) to 4), the present invention provides a thermoplastic resin composition in which a weight ratio of the first and second diene-based graft polymers is 1:0.55 to 2.80.

6) According to any one of 1) to 5), the present invention provides a thermoplastic resin composition in which the olefin-based non-grafted polymer includes one or more of oxidized polyethylene wax and non-oxidized polyethylene wax.

7) According to 6), the present invention provides a thermoplastic resin composition in which the non-oxidized polyethylene wax includes one or more of high-density polyethylene wax and low-density polyethylene wax.

8) According to any one of 1) to 7), the present invention provides a thermoplastic resin composition in which the olefin-based non-grafted polymer is included in an amount of 0.25 to 1.25 parts by weight with respect to 100 parts by weight of the base resin.

9) According to any one of 1) to 8), the present invention provides a thermoplastic resin composition in which the siloxane-based polymer includes one or more of polysiloxane, polydimethylsiloxane, polydiphenylsiloxane, polymethylphenylsiloxane and polymethylhydrogensiloxane.

10) According to any one of 1) to 9), the present invention provides a thermoplastic resin composition in which the thermoplastic polymer includes one or more of a diene-based graft polymer, a vinyl-based non-grafted polymer, a (meth)acrylate-based homopolymer and an olefin-based homopolymer.

11) According to any one of 1) to 10), the present invention provides a thermoplastic resin composition in which the siloxane-based mixture is included in an amount of 0.25 to 1.25 parts by weight with respect to 100 parts by weight of the base resin.

[Advantageous Effects]

A thermoplastic resin composition according to the present invention has excellent impact resistance, injection releasability, injection moldability and colorability. Also, the thermoplastic resin composition according to the present invention can mass-produce molded articles because a significantly small amount of mold deposits remains in a mold during injection molding.

[Modes of the Invention]

Terms and words used in this specification and claims should not be interpreted as being limited to commonly used meanings or meanings in dictionaries, and, based on the principle that the inventors can appropriately define concepts of terms in order to describe their invention in the best way, the terms and words should be interpreted with meanings and concepts which are consistent with the technical spirit of the present invention.

In the present invention, an average particle diameter may be measured by dynamic light scattering and specifically refer to an arithmetic average particle diameter in the particle size distribution as measured by dynamic light scattering, that is, an average particle diameter based on a scattering intensity distribution.

In addition, in the present invention, an average particle diameter may be measured using Nicomp 380 equipment commercially available from Particle Sizing Systems.

In the present invention a diene-based rubber polymer may be a polymer prepared by polymerizing, specifically, crosslinking diene-based monomers. The diene-based monomer may include one or more of 1,3-butadiene, isoprene, chloroprene and piperylene, with 1,3-butadiene being preferred.

In the present invention, an aromatic vinyl-based monomer may include one or more of styrene, $\alpha$-methyl styrene, $\alpha$-ethyl styrene and p-methyl styrene, with styrene being preferred.

In the present invention, a vinyl cyanide-based monomer may include one or more of acrylonitrile, methacrylonitrile, phenyl acrylonitrile and $\alpha$-chloroacrylonitrile, with acrylonitrile being preferred.

In the present invention, an olefin-based non-grafted polymer refers to a non-grafted polymer prepared using an olefin-based monomer as a main component. The olefin-based monomer may include one or more selected from the group consisting of ethylene, propylene and 1,3-butadiene, with ethylene being preferred.

**Thermoplastic resin composition**

A thermoplastic resin composition according to an embodiment of the present invention includes 1. a base resin and 2. an additive, wherein 1. the base resin includes a first diene-based graft polymer, a second diene-based graft polymer and a vinyl-based non-grafted polymer, an average particle diameter of a diene-based rubber polymer of the first diene-based graft polymer is larger than an average particle diameter of a diene-based rubber polymer of the second diene-based graft polymer, 2. the additive includes an olefin-based non-grafted polymer and a siloxane-based mixture in a weight ratio of 1:0.85 to 5.05, and the siloxane-based mixture includes a siloxane-based polymer and a thermoplastic polymer.

The additive includes the olefin-based non-grafted polymer and the siloxane-based mixture in a weight ratio of 1:0.85 to 5.05. The additive may include the olefin-based non-grafted polymer and the siloxane-based mixture in a weight ratio of preferably 1:0.90 to 5.00, more preferably 1:1.00 to 4.50, even more preferably 1:1.20 to 4.00, and most preferably 1:1.50 to 3.50. When the additive includes the siloxane-based mixture below the above-described condition, the injection releasability and injection moldability of the thermoplastic resin composition are degraded. When the additive includes the siloxane-based mixture above the above-described condition, the colorability of the thermoplastic resin composition is significantly degraded.

Hereinafter, the components of the thermoplastic resin composition according to an embodiment of the present invention will be described in detail.

## 1. **Base resin**

### 1) **First diene-based graft polymer**

The first diene-based graft polymer is a component that improves the impact resistance, injection releasability and injection moldability of the thermoplastic resin composition. An average particle diameter of a diene-based rubber polymer of the first diene-based graft polymer is larger than an average particle diameter of a diene-based rubber polymer of the second diene-based graft polymer to be described below.

The first diene-based graft polymer may be a graft polymer including: a diene-based rubber polymer; and a shell including an aromatic vinyl-based monomer unit and a vinyl cyanide-based monomer unit, which are grafted to the diene-based rubber polymer. The shell may include an aromatic vinyl-based monomer unit and a vinyl cyanide-based monomer unit, which are not grafted to the diene-based rubber polymer.

The diene-based rubber polymer may be prepared by polymerizing, preferably, crosslinking diene-based monomers, and may have an average particle diameter of 200 to 550 nm, preferably, 250 to 500 nm. When the above-described condition is satisfied, the impact resistance and surface characteristics of the first diene-based graft polymer can be improved.

The diene-based rubber polymer may be included in an amount of 30 to 80 wt%, preferably, 35 to 70 wt% with respect to the total weight of the first diene-based graft polymer. When the above-described condition is satisfied, the impact resistance of the first diene-based graft polymer can be improved.

The vinyl cyanide-based monomer unit may be included in an amount of 1 to 30 wt%, preferably, 5 to 25 wt% with respect to the total weight of the first diene-based graft polymer. When the above-described condition is satisfied, the chemical resistance of the first diene-based graft polymer can be improved.

The aromatic vinyl-based monomer unit may be included as the balance so that the total weight of the first diene-based graft polymer becomes 100 wt%.

The thermoplastic resin composition may include the first diene-based graft polymer in an amount of 5.0 to 20.0 parts by weight, preferably, 9.0 to 18.0 parts by weight with respect to 100 parts by weight of the base resin. When the above-described condition is satisfied, the thermoplastic resin composition can realize excellent injection releasability, injection moldability and colorability while realizing excellent impact resistance.

### 2) **Second diene-based graft polymer**

The second diene-based graft polymer is a component that improves the injection releasability, injection moldability and colorability of the thermoplastic resin composition.

The second diene-based graft polymer may be a graft polymer including: a diene-based rubber polymer; and a shell including an aromatic vinyl-based monomer unit and a vinyl cyanide-based monomer unit, which are grafted to the diene-based rubber polymer. The shell may include an aromatic vinyl-based monomer unit and a vinyl cyanide-based monomer unit, which are not grafted to the diene-based rubber polymer.

The diene-based rubber polymer may be prepared by polymerizing, preferably, crosslinking diene-based monomers, and may have an average particle diameter of 30 to 200 nm, preferably, 50 to 150 nm. When the above-described condition is satisfied, the injection releasability and colorability of the second diene-based graft polymer can be improved.

The diene-based rubber polymer may be included in an amount of 30 to 80 wt%, preferably, 35 to 70 wt% with respect to the total weight of the second diene-based graft polymer. When the above-described condition is satisfied, the injection releasability, injection moldability and colorability of the second diene-based graft polymer can be improved.

The vinyl cyanide-based monomer unit may be included in an amount of 1 to 30 wt%, preferably, 5 to 25 wt% with respect to the total weight of the second diene-based graft polymer. When the above-described condition is satisfied, the chemical resistance of the second diene-based graft polymer can be improved.

The aromatic vinyl-based monomer unit may be included as the balance so that the total weight of the second diene-based graft polymer becomes 100 wt%.

The thermoplastic resin composition may include the second diene-based graft polymer in an amount of 10.0 to 23.0 parts by weight, preferably, 12.0 to 21.0 parts by weight with respect to 100 parts by weight of the base resin. When the above-described condition is satisfied, the injection releasability, injection moldability and colorability of the thermoplastic resin composition can be improved.

Meanwhile, the sum of the first and second diene-based graft polymers may be 25 to 40 parts by weight, preferably, 28 to 35 parts by weight with respect to 100 parts by weight of the base resin. When the above-described condition is satisfied, the impact resistance, injection releasability, injection moldability and colorability of the thermoplastic resin composition can be harmoniously realized and maintained at appropriate levels.

A weight ratio of the first and second diene-based graft polymers may be 1:0.55 to 2.80, preferably, 1:0.60 to 2.30. When the above-described condition is satisfied, the impact resistance, injection releasability, injection moldability and colorability of the thermoplastic resin composition can be harmoniously realized and maintained at appropriate levels.

### 3) Vinyl-based non-grafted polymer

The vinyl-based non-grafted polymer is a component that improves the processability of the thermoplastic resin composition.

The vinyl-based non-grafted polymer may include an aromatic vinyl-based monomer unit and a vinyl cyanide-based monomer unit. Specifically, the vinyl-based non-grafted polymer may include an aromatic vinyl-based monomer unit and a vinyl cyanide-based monomer unit in a weight ratio of 90:10 to 60:40, preferably, 85:15 to 65:35. When the above-described condition is satisfied, a vinyl-based non-grafted polymer whose processability and chemical resistance are improved can be prepared.

The vinyl-based non-grafted polymer may be a binary polymer composed of an aromatic vinyl-based monomer unit and a vinyl cyanide-based monomer unit or a terpolymer composed of two types of aromatic vinyl-based monomer units and a vinyl cyanide-based monomer unit. Specifically, the vinyl-based non-grafted polymer may be one or more selected from the group consisting of a styrene/acrylonitrile polymer, an $\alpha$-methyl styrene/acrylonitrile polymer and a styrene/$\alpha$-methyl styrene/acrylonitrile polymer.

The thermoplastic resin composition may include the vinyl-based non-grafted polymer as the balance so that the sum of components of the base resin becomes 100 parts by weight.

### 2. Additive

### 1) Olefin-based non-grafted polymer

The olefin-based non-grafted polymer is a component that improves the injection releasability, injection moldability and colorability of the thermoplastic resin composition through synergy with the siloxane-based mixture to be described below.

The olefin-based non-grafted polymer may have a melt viscosity of 50 to 500 cps, preferably, 80 to 450 cps as measured at 140 °C in accordance with ASTM D1986-91. When the above-described condition is satisfied, injection moldability, injection releasability and colorability can be improved.

The olefin-based non-grafted polymer may include one or more of oxidized polyethylene wax and non-oxidized polyethylene wax.

The non-oxidized polyethylene wax may include one or more of high-density polyethylene wax and low-density polyethylene wax.

The thermoplastic resin composition may include the olefin-based non-grafted polymer in an amount of 0.25 to 1.25 parts by weight, preferably, 0.30 to 0.90 parts by weight with respect to 100 parts by weight of the base resin. When the above-described condition is satisfied, the injection moldability and colorability of the thermoplastic resin composition can be improved. Also, the amount of mold deposits remaining in a mold during injection molding of the thermoplastic resin composition is significantly reduced, and thus molded articles can be mass-produced.

### 2) Siloxane-based mixture

The siloxane-based mixture is a component that improves the injection releasability of the thermoplastic resin composition through synergy with the above-described olefin-based non-grafted polymer. Also, the siloxane-based mixture is a component that improves injection moldability by reducing the amount of mold deposits remaining in a mold during injection molding of the thermoplastic resin composition and, as a result, allows mass production of molded articles.

The siloxane-based mixture includes a siloxane-based polymer and a thermoplastic polymer.

The siloxane-based mixture may include the siloxane-based polymer in an amount of 40 to 60 wt%, preferably, 35 to 55 wt%. When the above-described condition is satisfied, injection moldability and injection releasability can be improved.

The siloxane-based mixture may include the thermoplastic polymer as the balance so that the total weight of the siloxane-based mixture becomes 100 wt%.

The siloxane-based mixture may be in the form of a masterbatch.

The siloxane-based polymer may have a weight average molecular weight of 150,000 to 5,000,000 g/mol, preferably 180,000 to 4,500,000 g/mol, and more preferably 200,000 to 4,000,000 g/mol. When the above-described condition is satisfied, impact resistance and injection releasability are improved, and mold deposits are reduced, and thus injection moldability can be improved.

The siloxane-based polymer may include one or more of polysiloxane, polydimethylsiloxane, polydiphenylsiloxane, polymethylphenylsiloxane and polymethylhydrogensiloxane.

When the siloxane-based mixture includes a thermoplastic polymer, compatibility with the base resin is improved, and thus the siloxane-based polymer included in the siloxane-based mixture can be more homogeneously mixed with the base resin.

The thermoplastic polymer may include one or more of a diene-based graft polymer, a vinyl-based non-grafted polymer, a (meth)acrylate-based homopolymer and an olefin-based homopolymer.

The diene-based graft polymer may be the same as or different from the first and second diene-based graft polymers included in the base resin. The diene-based graft polymer, which is the thermoplastic polymer, and the diene-based graft polymer included in the base resin may differ in terms of the average particle diameter of a rubber polymer, the gel content of a rubber polymer, the composition of a graft polymer, the weight average molecular weight of a shell, or the like. The diene-based graft polymer may be a mixture of two or more different diene-based graft polymers.

In addition, the vinyl-based non-grafted polymer may be the same as or different from the vinyl-based non-grafted polymer included in the base resin. The vinyl-based non-grafted polymer, which is the thermoplastic polymer, and the vinyl-based non-grafted polymer included in the base resin may differ in terms of a weight average molecular weight, a composition, or the like.

The (meth)acrylate-based homopolymer may be polymethyl methacrylate. The olefin-based homopolymer may include one or more of polyethylene and polypropylene.

The thermoplastic resin composition may include the siloxane-based mixture in an amount of 0.25 to 1.25 parts by weight, preferably, 0.30 to 1.00 parts by weight with respect to 100 parts by weight of the base resin. When the above-described condition is satisfied, uniform dispersion of the siloxane-based mixture in the base resin is possible, and thus the injection releasability of the thermoplastic resin composition can be improved. Also, the amount of mold deposits remaining in a mold during injection molding of the thermoplastic resin composition is reduced to improve injection moldability, and as a result, molded articles can be mass-produced.

Hereinafter, examples of the present invention will be described in detail so that those of ordinary skill in the art can easily carry out the present invention. However, it should be understood that the present invention can be implemented in various forms, and that the examples are not intended to limit the present invention.

**Examples and Comparative Examples**

The description of components used in the following examples and comparative examples is as follows.

1. Base resin

1) First diene-based graft polymer: DP270M commercially available from LG Chem. (including a butadiene rubber polymer having an average particle diameter of 300 nm and a shell including styrene and acrylonitrile units grafted to the butadiene rubber polymer)

2) Second diene-based graft polymer: DP229M commercially available from LG Chem. (including a butadiene rubber polymer having an average particle diameter of 100 nm and a shell including styrene and acrylonitrile units grafted to the butadiene rubber polymer)

3) Vinyl-based non-grafted polymer

(1) 81HF commercially available from LG Chem. (a binary polymer having a weight average molecular weight of 130,000 g/mol and including 76 wt% of a styrene unit and 24 wt% of an acrylonitrile unit)

(2) 82TR commercially available from LG Chem. (a binary polymer having a weight average molecular weight of 160,000 g/mol and including 82 wt% of a styrene unit and 18 wt% of an acrylonitrile unit)

2. Additive

1) Olefin-based non-grafted polymer

(1) Oxidized polyethylene wax: SUNFOL LE-718 commercially available from SFC. (melt viscosity: 180±100 cps (140 °C, ASTM D1986-91), acid value: 16±2 mgKOH/g (ASTM D1386))
(2) Non-oxidized polyethylene wax

① High-density polyethylene wax: SUNFOL H-633 commercially available from SFC. (melt viscosity: 330±100 cps (140 °C, ASTM D1986-91))
② Low-density polyethylene wax: SUNFOL L-533 commercially available from SFC. (melt viscosity: 300±100 cps (140 °C, ASTM D1986-91))

2) Siloxane-based mixture: MB50-007 commercially available from Dow Corning (a siloxane-based mixture in the form of a masterbatch composed of 50 wt% of polysiloxane and 50 wt% of ABS graft polymer, the flow index of ABS graft copolymer: 14 g/min (220 °C, 10 kg))
3) Siloxane-based polymer: polydimethylsiloxane (XIAMETER™ PMX-200 Silicone Fluid 30,000 cSt commercially available from Dow)

The above-described components were mixed in the compositions shown in Tables 1 to 5 below to prepare thermoplastic resin compositions.

**Experimental Example 1**

Each thermoplastic resin composition of the examples and comparative examples was extruded using a twin-screw extruder, the extruded strand was cooled in a cooling water tank, and a pellet was prepared using a pelletizer.
In this case, the temperature from the hopper of the twin-screw extruder to the die plate was set in multiple stages: 180 °C-190 °C-200 °C-210 °C-210 °C-215 °C-215 °C-220 °C-220 °C, a screw rotation speed was 250 rpm, and a feed rate was 15 kg/hr.
Subsequently, the pellet was dried at 80 °C for 2 hours.
Then, the physical properties of the dried pellet were measured by the following methods, and results thereof are shown in Tables 1 to 5 below.

1. Impact strength (kgf·cm/cm, 1/4 ln, 1/8 ln): The pellet was injection-molded to prepare a notched specimen, and the IZOD impact strength of the specimen was measured at 25 °C in accordance with ASTM D256.
2. Injection releasability (N): The dried pellet was injection-molded using an injection molding machine (injection temperature: 235 °C, mold temperature: 60 °C) using a cup mold (weight: 30 oz, Ø=58 mm, H=100 mm), and the resulting injection-molded product was ejected. Also, the pressure (N) applied to ejector pins during the ejection was measured to evaluate injection releasability.
Meanwhile, evaluation criteria for injection moldability are as follows.

◎ (excellent): less than 750 N

○ (good): 750 N or more and less than 850 N

△ (fair): 850 N or more and less than 950 N

✕ (poor): 950 N or more

3. Injection moldability (poor appearance): The dried pellet was injection-molded using an injection molding machine using a specially produced mold (size: 25 mm×10 mm, shape: a rectangular cap (with an internal space), number: 6) to prepare 210 specimens. Whether thread-like lines and burrs were generated in the specimen was visually observed, and the number of specimens in which thread-like lines and burrs were generated was counted.
Meanwhile, an internal temperature of the injection molding machine was 235 °C, a mold temperature was 17 °C, and an injection pressure was 800 bar.
4. Spiral flow (cm): The dried pellet was measured under conditions including an injection temperature of 235 °C, a mold temperature of 60 °C, a capillary thickness of 2.0 mm and a holding pressure of 100 bar in accordance with ASTM D3123. The measured spiral flow was also used as an indicator of injection moldability.

5. Mold deposit content (mg): The dried pellet was continuously injection-molded 1,000 times under conditions including an injection temperature of 270 °C and a mold temperature of 6 °C. Then, mold deposits accumulated in the mold were scraped off and weighed. Here, a temperature of the mold was set using a mold temperature controller.

**Experimental Example 2**

A color chip having an L value of 85.4, an a value of -18.55 and a b value of 30.88 in the CIE LAB color coordinate system was used as a first specimen. In this case, the first specimen was prepared by mixing 9.00 parts by weight of the first diene-based graft polymer, 21.00 parts by weight of the second diene-based graft polymer, 70.00 parts by weight of the vinyl-based non-grafted polymer (81HF) and 0.80 parts by weight of the siloxane-based mixture, which were used in the examples, with 4.00 parts by weight of a green pigment, extruding the resulting mixture by the method described in Experimental Example 1 to prepare a pellet, and injection-molding the pellet (injection temperature: 220 °C).

100 parts by weight of each thermoplastic resin composition of the examples and comparative examples was mixed with 4 parts by weight of a green pigment, and the resulting mixture was injection-molded using an injection molding machine set to 300 °C to prepare a second specimen.

Then, the physical properties of the prepared first and second specimens were measured by the following method, and results thereof are shown in Tables 1 to 5 below.

1. Colorability ($\triangle$E): The L, a and b values of the first and second specimens, which were measured in the CIE LAB color coordinate system, were substituted into the following equation to calculate colorability. In the present invention, it was determined that the lower the $\triangle$E value, the better the colorability.

$$\Delta E = \sqrt{(L' - L_0)^2 + (a' - a_0)^2 + (b' - b_0)^2}$$

In the above equation, L', a' and b' are the L, a, b values of the first specimen, respectively, as measured in the CIE LAB color coordinate system, and $L_0$, $a_0$ and $b_0$ are the L, a and b values of the second specimen, respectively, as measured in the CIE LAB color coordinate system.

◎ (excellent): 4.0 or more and less than 5.0
∘ (good): 5.5 or more and less than 7.0
△ (fair): 8.0 or more and less than 8.5
✕ (poor): 8.5 or more

[Table 1]

| Classification | | | Example 1 | Example 2 | Example 3 | Example 4 |
|---|---|---|---|---|---|---|
| Base resin (parts by weight) | First diene-based graft polymer | | 12.00 | 12.00 | 12.00 | 12.00 |
| | Second diene-based graft polymer | | 18.00 | 18.00 | 18.00 | 18.00 |
| | Vinyl-based non-grafted polymer | 81HF | 70.00 | 70.00 | 70.00 | 70.00 |
| | | 82TR | 0.00 | 0.00 | 0.00 | 0.00 |
| Additive (parts by weight) | Olefin-based non-grafted polymer | Oxidized polyethylene wax | 0.30 | 0.30 | 0.30 | 0.30 |
| | | High-density polyethylene wax | 0.00 | 0.00 | 0.00 | 0.00 |
| | | Low-density polyethylene wax | 0.00 | 0.00 | 0.00 | 0.00 |
| | Siloxane-based mixture | | 0.27 | 0.30 | 0.80 | 1.50 |

(continued)

| Classification | Example 1 | Example 2 | Example 3 | Example 4 |
|---|---|---|---|---|
| Weight ratio of olefin-based non-grafted polymer and siloxane-based mixture | 1:0.90 | 1:1.00 | about 1:2.67 | 1:5.00 |
| Impact strength (kgf·cm/cm, 1/8 In) | 16 | 17 | 20 | 23 |
| Injection releasability (N) | Δ | Δ | ○ | ○ |
| Injection moldability (defective appearance) | 1 | 1 | 0 | 0 |
| Spiral flow (cm) | 12 | 12 | 15 | 17 |
| Mold deposit (mg) | 45 | 45 | 50 | 55 |
| Colorability | ○ | ○ | ○ | Δ |

[Table 2]

| Classification | | | Example 5 | Example 6 | Example 7 | Example 8 | Example 9 |
|---|---|---|---|---|---|---|---|
| Base resin (parts by weight) | First diene-based graft polymer | | 12.00 | 12.00 | 12.00 | 12.00 | 12.00 |
| | Second diene-based graft polymer | | 18.00 | 18.00 | 18.00 | 18.00 | 18.00 |
| | Vinyl-based non-grafted polymer | 81HF | 70.00 | 70.00 | 0.00 | 70.00 | 70.00 |
| | | 82TR | 0.00 | 0.00 | 70.00 | 0.00 | 0.00 |
| Additive (parts by weight) | Olefin-based non-grafted polymer | Oxidized polyethylene wax | 0.80 | 0.80 | 0.30 | 0.00 | 0.00 |
| | | High-density polyethylene wax | 0.00 | 0.00 | 0.00 | 0.30 | 0.00 |
| | | Low-density polyethylene wax | 0.00 | 0.00 | 0.00 | 0.00 | 0.30 |
| | Siloxane-based mixture | | 0.80 | 1.13 | 0.80 | 0.80 | 0.80 |
| Weight ratio of olefin-based non-grafted polymer and siloxane-based mixture | | | 1:1.00 | about 1:1.14 | about 1:2.67 | about 1:2.67 | about 1:2.67 |
| Impact strength (kgf·cm/cm, 1/8 In) | | | 22 | 18 | 21 | 20 | 16 |
| Injection releasability (N) | | | ◎ | ◎ | ○ | ○ | ○ |
| Injection moldability (defective appearance) | | | 1 | 3 | 0 | 0 | 1 |
| Spiral flow (cm) | | | 16 | 22 | 17 | 17 | 16 |
| Mold deposit (mg) | | | 48 | 50 | 55 | 45 | 45 |
| Colorability | | | ◎ | ◎ | ○ | ◎ | ○ |

[Table 3]

| Classification | | | Example 10 | Example 11 | Example 12 | Example 13 | Example 14 |
|---|---|---|---|---|---|---|---|
| Base resin (parts by weight) | First diene-based graft polymer | | 9.00 | 15.00 | 18.00 | 14.00 | 11.20 |
| | Second diene-based graft polymer | | 21.00 | 15.00 | 12.00 | 21.00 | 16.80 |
| | Vinyl-based non-grafted polymer | 81HF | 70.00 | 70.00 | 70.00 | 65.00 | 72.00 |
| | | 82TR | 0.00 | 0.00 | 0.00 | 0.00 | 0.00 |
| Additive (parts by weight) | Olefin-based non-grafted polymer | Oxidized polyethylene wax | 0.30 | 0.30 | 0.30 | 0.30 | 0.30 |
| | | High-density polyethylene wax | 0.00 | 0.00 | 0.00 | 0.00 | 0.00 |
| | | Low-density polyethylene wax | 0.00 | 0.00 | 0.00 | 0.00 | 0.00 |
| | Siloxane-based mixture | | 0.80 | 0.80 | 0.80 | 0.80 | 0.80 |
| Weight ratio of olefin-based non-grafted polymer and siloxane-based mixture | | | about 1:2.67 | about 1:2.67 | about 1:2.67 | about 1:2.67 | about 1:2.67 |
| Impact strength (kgf·cm/cm, 1/8 In) | | | 18 | 27 | 30 | 36 | 17 |
| Injection releasability (N) | | | Δ | ○ | ○ | ○ | Δ |
| Injection moldability (defective appearance) | | | 1 | 0 | 0 | 0 | 1 |
| Spiral flow (cm) | | | 13 | 14 | 16 | 11 | 19 |
| Mold deposit (mg) | | | 53 | 47 | 42 | 55 | 35 |
| Colorability | | | ◎ | ○ | Δ | Δ | ◎ |

[Table 4]

| Classification | | | Example 15 | Comparative Example 1 | Comparative Example 2 | Comparative Example 3 | Comparative Example 4 |
|---|---|---|---|---|---|---|---|
| Base resin (parts by weight) | First diene-based graft polymer | | 12.00 | 12.00 | 12.00 | 12.00 | 12.00 |
| | Second diene-based graft polymer | | 18.00 | 18.00 | 18.00 | 18.00 | 18.00 |
| | Vinyl-based non-grafted polymer | 81HF | 70.00 | 70.00 | 70.00 | 70.00 | 70.00 |
| | | 82TR | 0.00 | 0.00 | 0.00 | 0.00 | 0.00 |

(continued)

| Classification | | | Example 15 | Comparative Example 1 | Comparative Example 2 | Comparative Example 3 | Comparative Example 4 |
|---|---|---|---|---|---|---|---|
| Additive (parts by weight) | Olefin-based non-grafted polymer | Oxidized polyethylene wax | 0.25 | 0.00 | 0.30 | 0.30 | 0.30 |
| | | High-density polyethylene wax | 0.00 | 0.00 | 0.00 | 0.00 | 0.00 |
| | | Low-density polyethylene wax | 0.00 | 0.00 | 0.00 | 0.00 | 0.00 |
| | Siloxane-based mixture | | 1.25 | 0.80 | 0.00 | 0.00 | 0.24 |
| | Siloxane-based polymer | | 0.00 | 0.00 | 0.00 | 0.80 | 0.00 |
| Weight ratio of olefin-based non-grafted polymer and siloxane-based mixture | | | 1:5.00 | - | - | - | 1:0.80 |
| Impact strength (kgf·cm/cm, 1/8 In) | | | 21 | 18 | 16 | 15 | 15 |
| Injection releasability (N) | | | ○ | × | × | ○ | × |
| Injection moldability (defective appearance) | | | 0 | 0 | 40 | 60 | 5 |
| Spiral flow (cm) | | | 13 | 14 | 17 | 18 | 10 |
| Mold deposit (mg) | | | 52 | 47 | 50 | 95 | 45 |
| Colorability | | | Δ | × | ○ | ○ | ○ |

[Table 5]

| Classification | | | Comparative Example 5 | Comparative Example 6 | Comparative Example 7 |
|---|---|---|---|---|---|
| Base resin (parts by weight) | First diene-based graft polymer | | 12.00 | 12.00 | 12.00 |
| | Second diene-based graft polymer | | 18.00 | 18.00 | 18.00 |
| | Vinyl-based non-grafted polymer | 81HF | 70.00 | 70.00 | 70.00 |
| | | 82TR | 0.00 | 0.00 | 0.00 |

(continued)

| Classification | | | Comparative Example 5 | Comparative Example 6 | Comparative Example 7 |
|---|---|---|---|---|---|
| Additive (parts by weight) | Olefin-based non-grafted polymer | Oxidized polyethylene wax | 0.30 | 1.30 | 0.24 |
| | | High-density polyethylene wax | 0.00 | 0.00 | 0.00 |
| | | Low-density polyethylene wax | 0.00 | 0.00 | 0.00 |
| | Siloxane-based mixture | | 1.53 | 1.04 | 1.23 |
| | Siloxane-based polymer | | 0.00 | 0.00 | 0.00 |
| Weight ratio of olefin-based non-grafted polymer and siloxane-based mixture | | | 1:5.10 | 1:0.80 | about 1:5.13 |
| Impact strength (kgf·cm/cm, 1/8 In) | | | 23 | 16 | 20 |
| Injection releasability (N) | | | ○ | ◎ | ○ |
| Injection moldability (defective appearance) | | | 1 | 20 | 0 |
| Spiral flow (cm) | | | 18 | 25 | 12 |
| Mold deposit (mg) | | | 56 | 52 | 50 |
| Colorability | | | × | ◎ | × |

Referring to Tables 1 to 5, in the case of the thermoplastic resin compositions of Examples 1 to 4 in which a weight ratio of an olefin-based non-grafted polymer and a siloxane-based mixture was 1:0.90 to 5.00, impact resistance, injection releasability, injection moldability and spiral flow were excellent, and an appropriate level of mold deposit content was exhibited.

However, in the case of the thermoplastic resin composition of Comparative Example 4 in which a weight ratio of an olefin-based non-grafted polymer and a siloxane-based mixture was 1: less than 0.90, impact resistance, injection releasability and injection moldability were degraded, and a spiral flow length was short, as compared to the thermoplastic resin compositions of Examples 1 to 4.

In addition, in the case of the thermoplastic resin composition of Comparative Example 5 in which a weight ratio of an olefin-based non-grafted polymer and a siloxane-based mixture was 1: more than 5.00, colorability was significantly degraded as compared to the thermoplastic resin compositions of Examples 1 to 4.

In the case of the thermoplastic resin compositions of Examples 5 and 6 in which weight ratios of an olefin-based non-grafted polymer and a siloxane-based mixture were 1:1.00 and about 1:1.14, respectively, impact resistance, injection releasability, injection moldability and spiral flow were excellent, and appropriate levels of mold deposit content were exhibited.

When Examples 3 and 7 were compared, it can be confirmed that the type of vinyl-based non-grafted polymer affected the mold deposit content.

When Examples 3, 8 and 9 were compared, it can be confirmed that the type of olefin-based non-grafted polymer affected the physical properties of the thermoplastic resin composition. Specifically, oxidized polyethylene wax improved injection moldability. High-density polyethylene wax reduced the mold deposit content and significantly improved injection moldability and colorability.

When Examples 3 and 10 to 12 were compared, as the first diene-based graft polymer content was increased, impact resistance, injection releasability, injection moldability and spiral flow were improved, and the mold deposit content was reduced. Also, as the second diene-based graft polymer content was increased, colorability was improved.

When Examples 3, 13 and 14 were compared, although a weight ratio of first and second diene-based graft polymers was the same, as the total content of first and second diene-based graft polymer was increased, impact resistance was improved. Also, as the total content of first and second diene-based polymers was decreased, the mold deposit content was reduced, and colorability was improved.

When Examples 4 and 15 in which a weight ratio of an olefin-based non-grafted polymer and a siloxane-based mixture was 1:5.00 were compared, Example 4 having higher contents of an olefin-based non-grafted polymer and a siloxane-based mixture exhibited excellent impact resistance and excellent injection moldability as compared to Example 15.

Meanwhile, in the case of Comparative Example 1 not including an olefin-based non-grafted polymer, injection releasability and colorability were significantly degraded compared to Examples 1 to 11.

In the case of Comparative Example 2 not including a siloxane-based mixture, injection releasability and injection moldability were significantly degraded compared to Examples 1 to 11.

In the case of Comparative Example 3 including a siloxane-based polymer instead of a siloxane-based mixture, injection moldability was significantly degraded, and the mold deposit content was significantly increased, compared to Examples 1 to 11.

When Comparative Examples 4 and 6 in which a weight ratio of an olefin-based non-grafted polymer and a siloxane-based mixture was 1:0.80 were compared, Comparative Example 6 having higher contents of an olefin-based non-grafted polymer and a siloxane-based mixture exhibited excellent impact resistance, injection releasability, injection moldability and colorability, but the mold deposit content was increased, compared to Comparative Example 4. However, both Comparative Example 4 and Comparative Example 6 did not exhibit excellent impact resistance.

When Comparative Examples 5 and 7 in which a weight ratio of an olefin-based non-grafted polymer and a siloxane-based mixture was 1: more than 5.00 were compared, Comparative Example 5 having higher contents of an olefin-based non-grafted polymer and a siloxane-based mixture exhibited excellent impact resistance and injection moldability, but the mold deposit content was increased, compared to Comparative Example 7. However, both Comparative Example 4 and Comparative Example 6 did not exhibit excellent colorability.

## Claims

1. A thermoplastic resin composition comprising a base resin and an additive,

   wherein the base resin includes a first diene-based graft polymer, a second diene-based graft polymer and a vinyl-based non-grafted polymer,
   an average particle diameter of a diene-based rubber polymer of the first diene-based graft polymer is larger than an average particle diameter of a diene-based rubber polymer of the second diene-based graft polymer,
   the additive includes an olefin-based non-grafted polymer and a siloxane-based mixture in a weight ratio of 1:0.85 to 5.05, and
   the siloxane-based mixture includes a siloxane-based polymer and a thermoplastic polymer.

2. The thermoplastic resin composition of claim 1, wherein the additive includes the olefin-based non-grafted polymer and the siloxane-based mixture in a weight ratio of 1:1.00 to 4.50.

3. The thermoplastic resin composition of claim 1, wherein the first diene-based graft polymer includes:

   a diene-based rubber polymer having an average particle diameter of 200 to 550 nm; and
   a shell including aromatic vinyl-based monomer and vinyl cyanide-based monomer units grafted to the diene-based rubber polymer.

4. The thermoplastic resin composition of claim 1, wherein the second diene-based graft polymer includes:

   a diene-based rubber polymer having an average particle diameter of 30 to 200 nm; and
   a shell including aromatic vinyl-based monomer and vinyl cyanide-based monomer units grafted to the diene-based rubber polymer.

5. The thermoplastic resin composition of claim 1, wherein a weight ratio of the first and second diene-based graft polymers is 1:0.55 to 2.80.

6. The thermoplastic resin composition of claim 1, wherein the olefin-based non-grafted polymer includes one or more of oxidized polyethylene wax and non-oxidized polyethylene wax.

7. The thermoplastic resin composition of claim 6, wherein the non-oxidized polyethylene wax includes one or more of high-density polyethylene wax and low-density polyethylene wax.

8. The thermoplastic resin composition of claim 1, wherein the olefin-based non-grafted polymer is included in an amount of 0.25 to 1.25 parts by weight with respect to 100 parts by weight of the base resin.

9. The thermoplastic resin composition of claim 1, wherein the siloxane-based polymer includes one or more of polysiloxane, polydimethylsiloxane, polydiphenylsiloxane, polymethylphenylsiloxane and polymethylhydrogensiloxane.

10. The thermoplastic resin composition of claim 1, wherein the thermoplastic polymer includes one or more of a diene-based graft polymer, a vinyl-based non-grafted polymer, a (meth)acrylate-based homopolymer and an olefin-based homopolymer.

11. The thermoplastic resin composition of claim 1, wherein the siloxane-based mixture is included in an amount of 0.25 to 1.25 parts by weight with respect to 100 parts by weight of the base resin.

## INTERNATIONAL SEARCH REPORT

| International application No. |
|---|
| **PCT/KR2024/000257** |

| A. | CLASSIFICATION OF SUBJECT MATTER |
|---|---|

**C08L 25/12**(2006.01)i; **C08L 55/02**(2006.01)i; **C08L 91/06**(2006.01)i; **C08L 83/04**(2006.01)i

According to International Patent Classification (IPC) or to both national classification and IPC

| B. | FIELDS SEARCHED |
|---|---|

Minimum documentation searched (classification system followed by classification symbols)

C08L 25/12(2006.01); C08F 2/24(2006.01); C08F 265/04(2006.01); C08F 265/06(2006.01); C08K 13/00(2006.01); C08K 3/013(2018.01); C08L 33/12(2006.01); C08L 51/04(2006.01); C08L 69/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열가소성 수지(thermoplastic resin), 디엔계 그래프트 중합체(diene-based graft polymer), 비닐계 비그래프트 중합체(vinyl-based nongraft polymer), 입경(particle size), 실록산(siloxane)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2012-0078583 A (CHEIL INDUSTRIES INC.) 10 July 2012 (2012-07-10)<br>See claim 1; and paragraphs [0086]-[0125]. | 1-11 |
| A | KR 10-2021-0049674 A (LG CHEM, LTD.) 06 May 2021 (2021-05-06)<br>See entire document. | 1-11 |
| A | KR 10-2015-0144795 A (STYROLUTION GROUP GMBH) 28 December 2015 (2015-12-28)<br>See entire document. | 1-11 |
| A | US 10017635 B2 (CHI MEI CORPORATION) 10 July 2018 (2018-07-10)<br>See entire document. | 1-11 |
| A | US 2020-0216664 A1 (MITSUBISHI CHEMICAL CORPORATION) 09 July 2020 (2020-07-09)<br>See entire document. | 1-11 |

| ☐ Further documents are listed in the continuation of Box C. | ☑ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **12 April 2024** | **15 April 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/000257**

| Patent document cited in search report | | | Publication date (day/month/year) | Patent family member(s) | | | Publication date (day/month/year) |
|---|---|---|---|---|---|---|---|
| KR | 10-2012-0078583 | A | 10 July 2012 | US | 2013-0281603 | A1 | 24 October 2013 |
| KR | 10-2021-0049674 | A | 06 May 2021 | CN | 113767148 | A | 07 December 2021 |
| | | | | CN | 113767148 | B | 10 November 2023 |
| | | | | EP | 3943546 | A1 | 26 January 2022 |
| | | | | EP | 3943546 | A4 | 22 June 2022 |
| | | | | JP | 2022-532109 | A | 13 July 2022 |
| | | | | JP | 7412842 | B2 | 15 January 2024 |
| | | | | KR | 10-2617163 | B1 | 27 December 2023 |
| | | | | US | 2022-0213307 | A1 | 07 July 2022 |
| | | | | WO | 2021-080215 | A1 | 29 April 2021 |
| KR | 10-2015-0144795 | A | 28 December 2015 | CN | 105164166 | A | 16 December 2015 |
| | | | | CN | 105164166 | B | 22 December 2017 |
| | | | | EP | 2986650 | A1 | 24 February 2016 |
| | | | | EP | 2986650 | B1 | 08 August 2018 |
| | | | | KR | 10-2179358 | B1 | 18 November 2020 |
| | | | | US | 2016-0075813 | A1 | 17 March 2016 |
| | | | | US | 9624333 | B2 | 18 April 2017 |
| | | | | WO | 2014-170406 | A1 | 23 October 2014 |
| US | 10017635 | B2 | 10 July 2018 | CN | 106928567 | A | 07 July 2017 |
| | | | | CN | 106928567 | B | 22 March 2019 |
| | | | | EP | 3187529 | A1 | 05 July 2017 |
| | | | | EP | 3187529 | B1 | 26 September 2018 |
| | | | | US | 2017-0190894 | A1 | 06 July 2017 |
| US | 2020-0216664 | A1 | 09 July 2020 | CN | 111051372 | A | 21 April 2020 |
| | | | | CN | 111051372 | B | 01 August 2023 |
| | | | | CN | 116903797 | A | 20 October 2023 |
| | | | | EP | 3693402 | A1 | 12 August 2020 |
| | | | | EP | 3693402 | B1 | 12 July 2023 |
| | | | | EP | 4234630 | A2 | 30 August 2023 |
| | | | | EP | 4234630 | A3 | 04 October 2023 |
| | | | | JP | 2020-069976 | A1 | 11 June 2020 |
| | | | | JP | 6988906 | B2 | 05 January 2022 |
| | | | | KR | 10-2020-0035162 | A | 01 April 2020 |
| | | | | KR | 10-2315627 | B1 | 21 October 2021 |
| | | | | US | 11306203 | B2 | 19 April 2022 |
| | | | | WO | 2019-069976 | A1 | 11 April 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230001864

- KR 20010062861 A